# EUROPÄISCHE PATENTSCHRIFT

(11) **EP 3 642 053 B1**
(45) Veröffentlichungstag und Bekanntmachung des Hinweises auf die Patenterteilung: **19.01.2022**
(21) Anmeldenummer: 18714732.7
(22) Anmeldetag: 19.03.2018
(51) Int. Cl.: B60C 11/16

(54) **FAHRZEUGLUFTREIFEN MIT EINEM LAUFSTREIFEN MIT SPIKES**
PNEUMATIC TIRE WITH A TREAD PORTION COMPRISING SPIKES
PNEUMATIQUE AVEC BANDAGE DE ROULEMENT MUNI DES CRAMPONS

(30) Priorität: 19.06.2017 DE 102017210179
(43) Veröffentlichungstag der Anmeldung: 29.04.2020
(73) Patentinhaber: Continental Reifen Deutschland GmbH, 30165 Hannover (DE)
(72) Erfinder: KÖTTER, Maik, 30451 Hannover (DE); SCHLITTENHARD, Jan, 30900 Wedemark (DE); SPECHTMEYER, Torben, 30451 Hannover (DE)
(74) Vertreter: Continental Corporation
(86) Internationale Anmeldenummer: PCT/EP2018/056800
(87) Internationale Veröffentlichungsnummer: WO 2018/233885

(56) Entgegenhaltungen:
- DE-A1-102009 044 767
- DE-A1-102013 113 043
- DE-A1-102014 219 615
- DE-A1-102015 223 091

## Beschreibung

Die Erfindung betrifft einen Fahrzeugluftreifen mit einem profilierten Laufstreifen mit Spikes, welche jeweils einen im Gummimaterial des Laufstreifens verankerten Spikekörper und einen über die Laufstreifenperipherie vorstehenden Spikepin aufweisen.

Es ist bekannt und üblich, in Laufstreifen von Fahrzeugluftreifen, welche für den Einsatz unter winterlichen Fahrbedingungen, insbesondere auf Schnee oder Eis, besonders gut geeignet sein sollen, Spikes einzusetzen. Die üblicherweise verwendeten Spikes weisen einen Spikekörper aus Aluminium oder aus Stahl auf, in welchem ein Spikepin aus Hartmetall verankert ist. Darüber hinaus sind auch Spikes mit Spikekörpern aus Kunststoffen bekannt. Aus der CA 755407 A ist ferner ein Spike bekannt, welcher einen metallischen Spikepin aufweist, welcher mit einem Fußflansch zum sicheren Verankern des Spikes im Gummimaterial des Laufstreifens versehen ist. Oberhalb des Fußflansches weist der Spikepin einen zylindrischen Pinabschnitt auf, welcher mit einem Spikekörper aus Gummi umhüllt ist.

Die DE 10 2015 223 091 A1 offenbart einen Fahrzeugluftreifen mit einem Laufstreifen mit Spikes, deren Spikepin und/oder deren Spikefuß zur Reduktion des Spikegewichtes und des Spikeverschleißes zumindest abschnittsweise in einen Gummimantel integriert ist bzw. sind.

Aus der DE 10 2013 113 043 A1 ist ein Verfahren zur Herstellung eines Spikes bekannt, bei welchem der Spikepin und/oder der Spikekörper mittels eines Pulverspritzgießverfahrens hergestellt wird bzw. werden. Das Verfahren soll eine kostengünstige Herstellung verschleißbeständiger Spikes ermöglichen.

Die DE 10 2014 219 615 A1 betrifft einen Fahrzeugluftreifen mit einem mit Spikes versehenen Laufstreifen, wobei die Spikeanzahl am Laufstreifen, die Masse eines Spikes in Gramm und der theoretischen Rollumfang gemäß E.T.R.T.O. derart aufeinander abgestimmt sind, dass der Reifen die Kriterien der in einigen Ländern (Finnland, Norwegen, Schweden) vorgeschriebenen Straßenabriebtests erfüllt.

Der Einsatz von Spikes in Fahrzeugluftreifen ist oft an strenge gesetzliche Vorgaben gebunden, insbesondere um den durch die Spikes hervorgerufenen Straßenverschleiß zu reduzieren. Dabei ist es bekannt, dass das Gewicht der verwendeten Spikes ein Haupteinflussparameter für den sich einstellenden Straßenverschleiß darstellt. Es ist daher von Vorteil, Spikes möglichst leicht auszuführen, indem beispielsweise als Material für die Spikekörper leichtere Werkstoffe, wie Kunststoff oder Gummi, verwendet werden.

Um die Griffigkeit von Fahrbahnoberflächen und damit die Verkehrssicherheit zu erhöhen, ist es üblich, Sand oder Bruchsteinsplit als Streugut einzusetzen. Die dadurch auf der Fahrbahnoberfläche vorhandenen kleinen Partikel dringen zwischen den Spikekörper und das Gummimaterial des Laufstreifens ein und bewirken derart einen Abrieb der Spikekörper. Durch diesen Abrieb werden die seitlichen Haltekräfte auf den Spike reduziert, was zu einem Verkippen der Spikes führt. Dieses Verkippen reduziert die Haftung des Fahrzeugluftreifens auf winterlichen Fahrbahnen, insbesondere auf Eis. Am größten ist ein derartiger Abrieb bei Spikekörpern aus Kunststoff, gefolgt von Spikekörpern aus Aluminium, welches etwas abriebbeständiger ist, und Stahl, welcher abriebbeständiger ist als Aluminium. Am abriebbeständigsten ist Gummi, welcher zudem auch den Vorteil eines relativ geringen Gewichts aufweist. Es ist ferner bekannt, dass die Ausgestaltung der Profilierung des Laufstreifens ebenfalls Einfluss auf das Abnützungsverhalten der Spikes hat. Darüber hinaus ist es bekannt, dass die üblicherweise in Laufstreifen verwendeten Spikes mit einem Spikekörper aus Aluminium im mittleren Bereich eines Laufstreifens durch den dort größeren Schlupf einem höheren Verschleiß unterliegen, als jene, die in den Seitenbereichen des Reifens angeordnet sind. Es besteht der Wunsch, über die Lebensdauer des Reifens eine mit dem Laufstreifenabrieb korrelierenden Abrieb der Spikes im Laufstreifen zu erreichen, um derart das Problem, dass in bestimmten Laufstreifenbereichen die Spikes in ihrer Wirkung nachlassen, während sie in anderen Laufstreifenbereichen ihre Wirkung länger behalten, zu lösen. Der Erfindung liegt daher die Aufgabe zu Grunde, einen Fahrzeugluftreifen der eingangs genannten Art entsprechend auszuführen.

Gelöst wird die gestellte Aufgabe erfindungsgemäß dadurch, dass der Laufstreifen Spikes mit aus einem ersten Material bestehenden Spikekörpern und Spikes mit aus einem zweiten Material bestehenden Spikekörpern enthält, wobei sich das erste Material vom zweiten Material in seiner Abriebbeständigkeit unterscheidet.

Die Erfindung löst daher auf eine sehr einfache Weise die oben angesprochene Problematik. Spikes mit Spikekörpern aus einem weniger abriebbeständigen Material werden vorrangig in jenen Bereichen des Laufstreifens verankert, die einem geringeren Verschleiß während des Betriebes des Reifens unterliegen, wogegen in jenen Bereichen des Laufstreifens, wo ein höherer Abrieb des Laufstreifenmaterials und/oder ein größerer Schlupf auftritt, vorrangig solche Spikes angeordnet werden, deren Spikekörper aus einem abriebbeständigeren Material besteht.

Bei einer bevorzugten Ausführung enthält der Laufstreifen Spikes mit aus Gummi bestehenden Spikekörpern. Darüber hinaus ist es von Vorteil, wenn der Laufstreifen auch Spikes mit aus Aluminium oder aus Stahl bestehenden Spikekörpern enthält. Besonders vorteilhaft ist eine Kombination von Spikes in einem Laufstreifen mit aus Aluminium und/oder aus Stahl bestehenden Spikekörpern und Spikes mit aus Gummi bestehenden Spikekörpern. Spikes mit Spikekörpern aus Aluminium oder Stahl werden insbesondere in jenen Laufstreifenbereichen angeordnet, in welchen ein geringerer Abrieb des Laufstreifengummis, und/oder ein geringerer Schlupf auftritt, als in anderen Bereichen des Laufstreifens, in welchen die Anordnung von Spikes mit Spikekörpern aus Gummi besonders günstig ist.

Spikes mit einem aus Gummi bestehenden Spikekörper sind insbesondere derart ausgeführt, dass das Gummimaterial des Spikekörpers einen metallischen Basisteil, welcher einen im Laufstreifen verankerten Fußflansch aufweist, als Hüllkörper umgibt. Das Gummimaterial des Spikekörpers befindet sich daher vorteilhafterweise in jenem Bereich im Laufstreifen, wo durch eindringende Partikel ein Verschleiß des Spikekörpers besonders nachteilig ist.

Bei einer weiteren bevorzugten Ausführung eines derartigen Spikes umhüllt das Gummimaterial als Gummischicht sowohl den Spikepin als auch den Fußflansch. Die Mitumhüllung von Spikepin und Fußflansch vereinfacht die Herstellung dieses Spiketyps.

Bevorzugter Weise sind in einem zentralen Bereich des Laufstreifens, welcher insbesondere über 30 % bis 50 % der Laufstreifenbreite verläuft, ausschließlich Spikes mit einem aus Gummi bestehenden Spikekörper und in den beiden Seitenbereichen des Laufstreifens ausschließlich Spikes mit einem aus Aluminium oder aus Stahl bestehenden Spikekörper verankert, wobei die Laufstreifenbreite der Breite des statisch ermittelnden Footprints des betreffenden Reifens bei einer Last von 70 % der maximalen Tragfähigkeit bei einem Innendruck von 85 %, ermittelt nach E.T.R.T.O.-Standards, entspricht. Diese Ausführung ist besonders vorteilhaft, um dem durch unterschiedlichen Schlupf in den unterschiedlichen Laufstreifenbereichen verursachten unterschiedlichen Abrieb möglichst optimal entgegen zu wirken.

Bei einem Fahrzeugluftreifen, bei welchem die Spikes im Laufstreifen in in Umfangsrichtung umlaufenden Spikespuren angeordnet sind, kann es zweckmäßig sein, wenn in einzelnen oder in sämtlichen Spikespuren Spikes mit Spikekörpern aus dem ersten Material und Spikes mit Spikekörpern aus dem zweiten Material angeordnet sind. Durch diese Maßnahme kann eine für den Spikekörper -und den Laufstreifenabrieb besonders günstige Verteilung der Spikes mit Spikekörpern aus unterschiedlichen Materialien im Laufstreifen erfolgen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht einer ersten Ausführungsvariante eines Spikes,
Fig. 2 eine Ansicht einer weiteren Ausführungsvariante eines Spikes,
Fig. 3 eine Ansicht einer dritten Ausführungsvariante eines Spikes und
Fig. 4 eine Draufsicht auf einen Umfangsabschnitt eines Laufstreifens eines Fahrzeugluftreifens mit einer Ausführungsvariante der Anordnung von unterschiedlich ausgeführten Spikes.

Die Erfindung befasst sich mit der Anordnung von Spikes unterschiedlicher Ausgestaltung im Laufstreifen eines Fahrzeugluftreifens sowie mit bevorzugten Ausgestaltungen solcher Spikes.

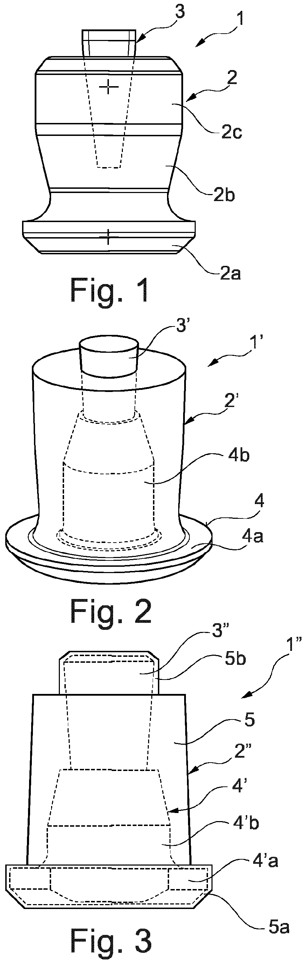

Die in Fig. 1, Fig. 2 und Fig. 3 dargestellten Spikes 1, 1', 1" sind der Einfachheit halber in rotationssymmetrischen Ausführungen dargestellt und weisen daher rotationssymmetrisch ausgeführte Spikekörper 2, 2', 2" und Spikepins 3, 3', 3" auf. Sowohl die Spikekörper 2, 2', 2" als auch die Spikepins 3, 3', 3" können eine von der rotationssymmetrischen Ausgestaltung abweichende äußere Gestalt aufweisen. Derartige Ausgestaltungen sind aus dem Stand der Technik hinlänglich bekannt.

Der in Fig. 1 gezeigte Spike 1 weist einen Spikekörper 2 mit einem Fuß flansch 2a, einem an diesen anschließenden taillierten Mittelteil 2b und einem an diesen anschließenden Oberflansch 2c auf. Der Spikepin 3 ist im Spikekörper 2 verankert und überragt in an sich bekannter Weise den Oberflansch 2c. Typischerweise besteht der Spikepin 3 aus einem Hartmetall, der Spikekörper 2 kann aus Aluminium, aus Stahl oder aus einem Kunststoff, welcher beispielsweise auch faserverstärkt sein kann, bestehen.

Bei dem in Fig. 2 gezeigten Spike 1' ist ein separater Basisteil 4 mit einem Fuß flansch 4a, welcher mit dem Fuß flansch 2a des Spikes 1 gemäß der ersten Ausführungsform vergleichbar ist, sowie einem mit diesem einteilig ausgeführten zentralen Teil 4b vorgesehen. Der zentrale Teil 4b weist einen wesentlich kleineren Durchmesser auf, als der Fuß flansch 4a. Der Spikepin 3' ist von oben im zentralen Teil 4b des Basisteils 4 verankert. Der Spikekörper 2' umgibt hüllenartig den zentralen Teil 4b und einen Abschnitt des Spikepins 3', sodass dieser in bekannter und üblicher Weise den Spikekörper 2' überragt. Bei der in Fig. 2 gezeigten Ausführung reicht der Spikekörper 2' bis zur Oberseite des Fußflansches 4a des Basisteils 4. Der Spikepin 3' besteht insbesondere aus einem Hartmetall, der Basisteil 4 vorzugsweise aus Aluminium und der Spikekörper 2' aus Gummi.

Der in Fig. 3 gezeigte Spike 1" weist ebenfalls einen Basisteil 4' mit einem Fuß flansch 4'a und einem zentralen Teil 4'b auf, in welchen der Spikepin 3" eingesetzt ist. Der Spikekörper 2" besteht aus Gummi und weist einen vorzugsweise zylindrischen Hüllkörper 5 auf, welcher den zentralen Teil 4'b des Basisteils 4' und einen Abschnitt des Spikepins 3" umgibt und weist ferner eine den Fußflansch 4'a überziehende Gummischicht 5a sowie eine weitere Gummischicht 5b auf, welche jenen Abschnitt des Spikepins 3" überzieht, der den Hüllkörper 5 überragt. Der Spike 1" ist daher im Neuzustand komplett von Gummimaterial ummantelt. Der Spikepin 3" besteht insbesondere aus einem Hartmetall, der Basisteil 4' vorzugsweise aus Aluminium.

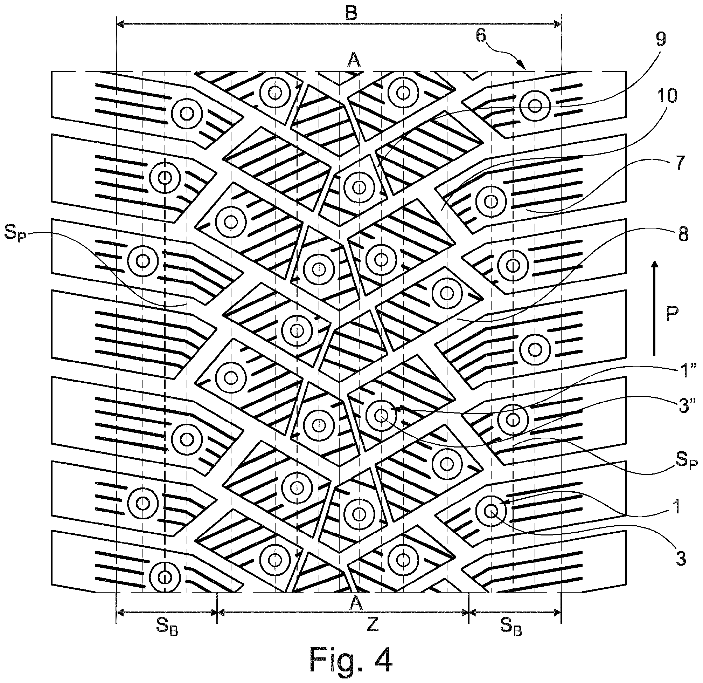

Fig. 4 zeigt beispielhaft einen Laufstreifen mit einem drehrichtungsgebundenen Profil, welcher Laufstreifen beispielsweise ein Laufstreifen für einen PKW-Reifen mit Winterfahreigenschaften ist. Der dargestellte Laufstreifen weist zwei schulterseitige Profilblockreihen 6 auf, zwischen welchen weitere Profilblöcke 7 ausgebildet sind, welche durch V-förmige, über die Breite des Laufstreifens verlaufende Querrillen 8 und eine Anzahl von Umfangsrillen 9 und Schrägrillen 10 gebildet sind. Mit B ist die Breite des bodenberührenden Teils des Laufstreifens gekennzeichnet. B entspricht der Breite des statisch ermittelnden Footprints des betreffenden Reifens bei einer Last von 70 % der maximalen Tragfähigkeit bei einem Innendruck von 85 %, ermittelt nach E.T.R.T.O.-Standards. Der Laufstreifen ist innerhalb der Breite B mit einer Vielzahl von Spikes versehen, wobei bei der dargestellten Ausführung im Laufstreifen sowohl Spikes 1 als auch Spikes 1" verankert sind. Die Spikes 1 bzw. 1" sind in sogenannten Spikespuren S_{P}, deren Anzahl über die Breite B üblicherweise zwischen 4 und 25, insbesondere 12 bis 20, beträgt, angeordnet. Spikespuren S_{P} sind parallel zur Umfangsrichtung bzw. zum Reifenäquator A-A kreisförmig umlaufende Linien und in Fig. 4 als gestrichelte Linien versinnbildlicht. Bei der in Fig. 4 gezeigten Ausführung sind pro Laufstreifenhälfte sieben Spikespuren S_{P} vorgesehen, wobei die Anordnung der Spikespuren S_{P} bezüglich des Reifenäquators A-A im Beispiel symmetrisch erfolgt. In einem zentralen Umfangsbereich Z des Laufstreifens, welcher symmetrisch zum Reifenäquator A-A über 30% bis 50% der Breite B verläuft, befinden sich in den Spikespuren S_{P} ausschließlich Spikes 1", also Spikes mit einem Spikekörper 2" aus Gummi. In an den Laufstreifenrand anschließenden, jeweils über 25 - 35 % der Breite B verlaufenden seitlichen Umfangsbereichen S_{B} befinden sich ausschließlich Spikes 1, also Spikes mit einem Spikekörper 2 aus Aluminium, Stahl oder Kunststoff.

Durch die Geometrie der Laufstreifenaußenkontur mit einem maximalen Durchmesser im Bereich der Äquatorebene des Reifens und einem etwas kleineren Durchmesser in den Schulterbereichen entstehen beim Abrollen des Reifens, und zwar beim Abplatten des Reifens, Schlupfbewegungen in der Bodenaufstandsfläche (Footprint). Diese sind im mittleren Bereich des Footprints nahe der Äquatorebene besonders hoch, da hier der Reifen seine größte Umfangsgeschwindigkeit hat und somit die größte Differenz zur "Footprintgeschwindigkeit" des Rades vorliegt. Diese Geschwindigkeitsdifferenz führt zu Schlupf beim Rollen eines Rades, welcher durch etwaigen Brems- und Antriebsschlupf überlagert wird. Schlupf verursacht Verschleiß bzw. Abrieb des Laufstreifens, es ist daher die Anordnung von Spikes 1' oder 1" im zentralen Bereich Z des Laufstreifens besonders günstig, weil Spikekörper 2', 2" aus Gummi wesentlich unempfindlicher gegenüber Abrieb sind, als der ansonsten übliche Werkstoff für Spikekörper, nämlich Aluminium. Spikes 1' oder 1" mit einem Spikekörper aus Gummi, die im mittleren Laufstreifenbereich angeordnet sind, nützen sich daher im Wesentlichen gleich stark ab wie die umgebende Lauffläche des Fahrzeugluftreifens. In den Seitenbereichen des Laufstreifens, in welchen weniger Schlupf auftritt, ist es vorteilhaft, Spikes 1 mit einem Spikekörper aus Aluminium, Stahl oder Kunststoff anzuordnen, um in diesen Bereichen den Spikeabrieb ebenfalls möglichst optimal an den Abrieb des Laufstreifens anzupassen.

Je nach Reifentyp und auch in Abhängigkeit von der Ausgestaltung der Profilierung des Laufstreifens kann es jedoch auch von Vorteil sein, wenn im zentralen Laufstreifenbereich Z Spikes 1 mit Spikekörpern aus einem weniger abriebbeständigen Material vorgesehen werden und in den Seitenbereichen S_{B} des Laufstreifens Spikes 1' oder Spikes 1" mit Spikekörpern 2', 2" aus Gummi.

Bei einer weiteren Ausführungsform können in einzelnen Spikespuren S_{P} oder in sämtlichen Spikespuren S_{P} Spikes 1, 1', 1" mit Spikekörpern 2, 2', 2" aus unterschiedlichen Materialien in Kombination verwendet werden. Bei einer bevorzugten Ausführung wird in den Spikespuren S_{P} in den seitlichen Umfangsbereichen S_{B} insgesamt die Anzahl der Spikes 1 größer gewählt als die Anzahl der Spikes 1' oder 1. In den Spikespuren S_{P} im zentralen Laufstreifenbereich Z wird insbesondere die Anzahl der Spikes 1' bzw. 1" insgesamt größer gewählt, als die Anzahl der Spikes 1.

### Bezugszeichenliste

- 1, 1', 1": Spike
- 2, 2', 2": Spikekörper
- 2a: Fußflansch
- 2b: Mittelteil
- 2c: Oberflansch
- 3, 3', 3": Spikepin
- 4, 4': Basisteil
- 4a, 4'a: Fußflansch
- 4b, 4'b: zentraler Teil
- 5: Hüllkörper
- 5'a, 5'b: Gummischicht
- 6: schulterseitige Profilblockreihen
- 7: Profilblock
- 8: Querrille
- 9: Umfangsrille
- 10: Schrägrille
- B: Breite
- Sp: Spikespuren
- S_{B}: seitlicher Umfangsbereich
- A-A: Reifenäquator
- Z: zentraler Umfangsbereich

## Patentansprüche

1. Fahrzeugluftreifen mit einem profilierten Laufstreifen mit Spikes (1, 1', 1"), welche jeweils einen im Gummimaterial des Laufstreifens verankerten Spikekörper (2, 2', 2") und einen über die Laufstreifenperipherie vorstehenden Spikepin (3, 3', 3") aufweisen,
**dadurch gekennzeichnet,**
**dass** der Laufstreifen Spikes (1) mit aus einem ersten Material bestehenden Spikekörpern (2) und Spikes (1',1") mit aus einem zweiten Material bestehenden Spikekörpern (2', 2") enthält, wobei sich das erste Material vom zweiten Material in seiner Abriebbeständigkeit unterscheidet.

2. Fahrzeugluftreifen nach Anspruch 1, **dadurch gekennzeichnet, dass** der Laufstreifen Spikes (1',1") mit aus Gummi bestehenden Spikekörpern (2', 2") enthält.

3. Fahrzeugluftreifen nach Anspruch 1 oder 2, **dadurch gekennzeichnet, dass** der Laufstreifen Spikes (1) mit aus Aluminium bestehenden Spikekörpern (2) enthält.

4. Fahrzeugluftreifen nach einem der Ansprüche 1 bis 3, **dadurch gekennzeichnet, dass** der Laufstreifen Spikes (1) mit aus Stahl bestehenden Spikekörpern (2) enthält.

5. Fahrzeugluftreifen nach einem der Ansprüche 1 bis 4, **dadurch gekennzeichnet, dass** der Laufstreifen Spikes (1) mit aus Aluminium und/oder aus Stahl bestehenden Spikekörpern (2) und Spikes (1, 1") mit aus Gummi bestehenden Spikekörpern (2', 2") enthält.

6. Fahrzeugluftreifen nach einem der Ansprüche 2 bis 5, **dadurch gekennzeichnet, dass** bei Spikes (1', 1") mit einem aus Gummi bestehenden Spikekörper (2', 2") das Gummimaterial einen metallischen Basisteil (4, 4'), in welchem der Spikepin (3', 3") verankert ist und welcher einen im Laufstreifen verankerten Fußflansch (4a, 4'a) aufweist, als Hüllkörper (5) umgibt.

7. Fahrzeugluftreifen nach Anspruch 6, **dadurch gekennzeichnet, dass** das Gummimaterial als Gummischicht (5a, 5b) sowohl den Spikepin (2") als auch den Fußflansch (4'a) umhüllt.

8. Fahrzeugluftreifen nach einem der Ansprüche 1 bis 7, **dadurch gekennzeichnet, dass** in einem zentralen Bereich (Z) des Laufstreifens, welcher vorzugsweise über 30% bis 50% der Laufstreifenbreite (B) verläuft, ausschließlich Spikes (1', 1") mit einem aus Gummi bestehenden Spikekörper (2', 2") und in den beiden Seitenbereichen (S_{B}) des Laufstreifens ausschließlich Spikes (1) mit einem aus Aluminium oder aus Stahl bestehenden Spikekörper (2) verankert sind, wobei die Laufstreifenbreite (B) der Breite des statisch ermittelnden Footprints des betreffenden Reifens bei einer Last von 70 % der maximalen Tragfähigkeit bei einem Innendruck von 85 %, ermittelt nach E.T.R.T.O.-Standards, entspricht.

9. Fahrzeugluftreifen nach einem der Ansprüche 1 bis 7, **dadurch gekennzeichnet, dass** in einem zentralen Bereich (Z) des Laufstreifens, welcher vorzugsweise über 30% bis 50% der Laufstreifenbreite (B) verläuft, der Anteil an Spikes (1', 1") mit einem aus Gummi bestehenden Spikekörper (2', 2") größer 50%, insbesondere größer 70 %, beträgt und in den beiden Seitenbereichen (S_{B}) des Laufstreifens der Anteil an Spikes (1) mit einem aus Aluminium oder aus Stahl bestehenden Spikekörper (2) größer 50%, insbesondere größer 70 %, beträgt, wobei die Laufstreifenbreite (B) der Breite des statisch ermittelnden Footprints des betreffenden Reifens bei einer Last von 70 % der maximalen Tragfähigkeit bei einem Innendruck von 85 %, ermittelt nach E.T.R.T.O.-Standards, entspricht.

10. Fahrzeugluftreifen nach einem der Ansprüche 1 bis 7 oder 9, wobei die Spikes (1, 1', 1") in in Umfangsrichtung umlaufenden Spikespuren (S_{P}) angeordnet sind, **dadurch gekennzeichnet, dass** in einzelnen oder in sämtlichen Spikespuren (S_{P}) Spikes (1) mit Spikekörpern (2) aus dem ersten Material und Spikes (1', 1") mit Spikekörpern (2', 2") aus dem zweiten Material angeordnet sind.

## Claims

1. Pneumatic vehicle tyre comprising a profiled tread with spikes (1, 1', 1"), each of which has a spike body (2, 2', 2"), which is anchored in the rubber material of the tread, and a spike pin (3, 3', 3"), which projects beyond the periphery of the tread, **characterized**
**in that** the tread contains spikes (1) with spike bodies (2) consisting of a first material and spikes (1, 1") with spike bodies (2', 2") consisting of a second material, the first material being different from the second material in its wear resistance.

2. Pneumatic vehicle tyre according to Claim 1, **characterized in that** the tread contains spikes (1', 1") with spike bodies (2', 2") consisting of rubber.

3. Pneumatic vehicle tyre according to Claim 1 or 2, **characterized in that** the tread contains spikes (1) with spike bodies (2) consisting of aluminium.

4. Pneumatic vehicle tyre according to one of Claims 1 to 3, **characterized in that** the tread contains spikes (1) with spike bodies (2) consisting of steel.

5. Pneumatic vehicle tyre according to one of Claims 1 to 4, **characterized in that** the tread contains spikes (1) with spike bodies (2) consisting of aluminium and/or of steel and spikes (1, 1") with spike bodies (2', 2") consisting of rubber.

6. Pneumatic vehicle tyre according to one of Claims 2 to 5, **characterized in that**, in the case of spikes (1', 1") with a spike body (2', 2") consisting of rubber, the rubber material acts as an enveloping body surrounding a metallic base part (4, 4'), in which the spike pin (3', 3") is anchored and which has a bottom flange (4a, 4'a) anchored in the tread.

7. Pneumatic vehicle tyre according to Claim 6, **characterized in that** the rubber material envelops both the spike pin (2") and the bottom flange (4'a) as a rubber layer (5a, 5b).

8. Pneumatic vehicle tyre according to one of Claims 1 to 7, **characterized in that**, in a central region (Z) of the tread, which preferably runs over 30% to 50% of the tread width (B), only spikes (1', 1") with a spike body (2', 2") consisting of rubber are anchored and, in the two side regions (S_{B}) of the tread, only spikes (1) with a spike body (2) consisting of aluminium or of steel are anchored, the tread width (B) corresponding to the width of the statically determined footprint of the tyre concerned under a load of 70% of the maximum load-bearing capacity at an internal pressure of 85%, determined in accordance with E.T.R.T.O. standards.

9. Pneumatic vehicle tyre according to one of Claims 1 to 7, **characterized in that**, in a central region (Z) of the tread, which preferably runs over 30% to 50% of the tread width (B), the proportion of spikes (1', 1") with a spike body (2', 2") consisting of rubber is greater than 50%, in particular greater than 70%, and, in the two side regions (S_{B}) of the tread, the proportion of spikes (1) with a spike body (2) consisting of aluminium or of steel is greater than 50%, in particular greater than 70%, the tread width (B) corresponding to the width of the statically determined footprint of the tyre concerned under a load of 70% of the maximum load-bearing capacity at an internal pressure of 85%, determined in accordance with E.T.R.T.O. standards.

10. Pneumatic vehicle tyre according to one of Claims 1 to 7 or 9, the spikes (1, 1', 1") being arranged in spike tracks (Sp) running around in the circumferential direction, **characterized in that** in some of or all of the spike tracks (Sp) spikes (1) with spike bodies (2) of the first material and spikes (1', 1") with spike bodies (2', 2") of the second material are arranged.

## Revendications

1. Pneumatique de véhicule muni d'une bande de roulement profilée munie de crampons (1, 1', 1"), qui comprennent chacun un corps de crampon (2, 2', 2") ancré dans le matériau en caoutchouc de la bande de roulement et une pointe de crampon (3, 3', 3") dépassant de la périphérie de la bande de roulement, **caractérisé en ce que**
la bande de roulement comprend des crampons (1) ayant des corps de crampons (2) constitués d'un premier matériau et des crampons (1', 1") ayant des corps de crampons (2', 2") constitués d'un deuxième matériau, le premier matériau étant différent du deuxième matériau par sa résistance à l'abrasion.

2. Pneumatique de véhicule selon la revendication 1, **caractérisé en ce que** la bande de roulement contient des crampons (1', 1") ayant des corps de crampons (2', 2") constitués de caoutchouc.

3. Pneumatique de véhicule selon la revendication 1 ou 2, **caractérisé en ce que** la bande de roulement contient des crampons (1) ayant des corps de crampons (2) constitués d'aluminium.

4. Pneumatique de véhicule selon l'une quelconque des revendications 1 à 3, **caractérisé en ce que** la bande de roulement contient des crampons (1) ayant des corps de crampons (2) constitués d'acier.

5. Pneumatique de véhicule selon l'une quelconque des revendications 1 à 4, **caractérisé en ce que** la bande de roulement contient des crampons (1) ayant des corps de crampons (2) constitués d'aluminium et/ou d'acier et des crampons (1, 1") ayant des corps de crampons (2', 2") constitués de caoutchouc.

6. Pneumatique de véhicule selon l'une quelconque des revendications 2 à 5, **caractérisé en ce que**, dans le cas de crampons (1', 1") ayant un corps de crampon (2', 2") constitué de caoutchouc, le matériau en caoutchouc entoure, en tant que corps d'enveloppe (5), une partie de base métallique (4, 4') dans laquelle la pointe de crampon (3', 3") est ancrée et qui présente une bride de pied (4a, 4'a) ancrée dans la bande de roulement.

7. Pneumatique de véhicule selon la revendication 6, **caractérisé en ce que** le matériau en caoutchouc entoure, en tant que couche de caoutchouc (5a, 5b), aussi bien la pointe de crampon (2") que la bride de pied (4'a).

8. Pneumatique de véhicule selon l'une quelconque des revendications 1 à 7, **caractérisé en ce qu'**exclusivement des crampons (1', 1") ayant un corps de crampon (2', 2") constitué de caoutchouc sont ancrés dans une zone centrale (Z) de la bande de roulement, qui s'étend de préférence sur 30 % à 50 % de la largeur (B) de la bande de roulement, et exclusivement des crampons (1) ayant un corps de crampon (2) constitué d'aluminium ou d'acier sont ancrés dans les deux zones latérales (S_{B}) de la bande de roulement, la largeur (B) de la bande de roulement correspondant à la largeur de l'empreinte déterminée de manière statique du pneu concerné sous une charge de 70 % de la capacite de charge maximale à une pression interne de 85 %, déterminée selon les normes E.T.R.T.O.

9. Pneumatique de véhicule selon l'une quelconque des revendications 1 à 7, **caractérisé en ce que**, dans une zone centrale (Z) de la bande de roulement, qui s'étend de préférence sur 30 % à 50 % de la largeur (B) de la bande de roulement, la proportion de crampons (1', 1") ayant un corps de crampon (2', 2") constitué de caoutchouc est supérieure à 50 %, en particulier supérieure à 70 %, et, dans les deux zones latérales (S_{B}) de la bande de roulement, la proportion de crampons (1) ayant un corps de crampon (2) constitué d'aluminium ou d'acier est supérieure à 50 %, en particulier supérieure à 70 %, la largeur (B) de la bande de roulement correspondant à la largeur de l'empreinte déterminée de manière statique du pneu concerné sous une charge de 70 % de la capacité de charge maximale à une pression interne de 85 %, déterminée selon les normes E.T.R.T.O.

10. Pneumatique de véhicule selon l'une quelconque des revendications 1 à 7 ou 9, dans lequel les crampons (1, 1', 1") sont agencés dans des pistes de crampons (S_{P}) périphériques dans la direction circonférentielle, **caractérisé en ce que** des crampons (1) ayant des corps de crampons (2) en le premier matériau et des crampons (1', 1") ayant des corps de crampons (2', 2") en le deuxième matériau sont agencés dans certaines ou dans toutes les pistes de crampons (S_{P}).
